Europäisches Patentamt

European Patent Office

Office européen des brevets

(11) Publication number: **0 105 681**
**A1**

(12) # EUROPEAN PATENT APPLICATION

(21) Application number: 83305683.1

(22) Date of filing: 22.09.83

(51) Int. Cl.³: **B 60 Q 1/40**

(30) Priority: 29.09.82 GB 8227823

(43) Date of publication of application:
18.04.84 Bulletin 84/16

(84) Designated Contracting States:
DE FR GB IT SE

(71) Applicant: AB Electronic Components Limited
Abercynon
Mountain Ash Mid-Glamorgan CF45 4SF Wales(GB)

(72) Inventor: Embrey, Derek Morris
102, Mill Road Lisvane
Cardiff Wales(GB)

(72) Inventor: Webb, Stuart Frederick
90, London Road
Wokingham Berkshire(GB)

(72) Inventor: Bickford, Ian James
35, New Inn Lane Burpham
Guildford Surrey(GB)

(72) Inventor: Doss-Desouza, Argus Francis Caxton
166, College Road College Town
Camberley Surrey(GB)

(74) Representative: Smith, Geoffrey Leonard et al,
STANLEY, POPPLEWELL, POOLE 57 Lincoln's Inn Fields
London WC2A 3LS(GB)

(54) Direction indicator cancellation device.

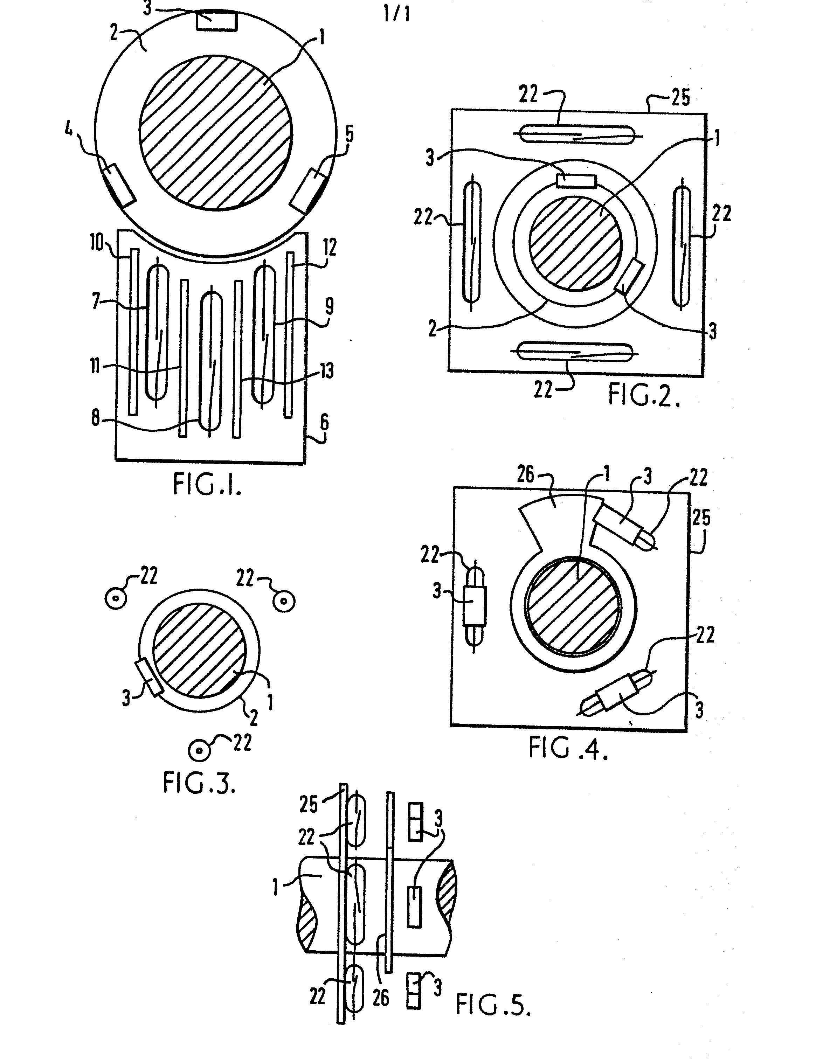

(57) In order to provide signals for electronic cancelaltion of a direction indicator signal, a steering column (1) has associated with it a series of magnetic reed switches (7, 8, 9). In the arrangement illustrated in Figure 1, the steering column (1) has a carrier (2) of non-magnetic material rotatable with it and carrying permanent magnets (3, 4, 5) to operate the reed switches in order or the other in accordance with the direction of rotation of the steering column (1). Flux concentrators (10, 11, 12, 13) are shown as ensuring non ambiguous operation of the reed switches (7, 8, 9).

FIG.1.

EP 0 105 681 A1

SPP A/3361                    - 1 -


Title:-  Direction Indicator Cancellation Device


This invention relates to devices for automatic cancellation
of direction indication signals, particularly in or for
motor vehicles.


This function is currently carried out by mechanical devices
with a reasonable degree of reliability and at no inconsiderable
expense.  The use of mechanical devices does mean that there
is a risk of  unreliability creeping in as wear of the moving
and  interacting parts takes place, as well as the need
for preventive maintenance.


There is an increasing use of electronics in vehicles and
many functions previously achieved with electro-mechanical
devices are now being implemented purely electronically.


Electronic control of direction indicators offers many
advantages,  for example a flash rate which is independant
of the power load of the lamps.  To complement the reliability
of electronic systems, there is a need for an arrangement
to cancel the indicators from the steering column and which
avoidS  the inherent problems of the mechanical device currently
employed.  Such a new arrangement should interface directly
with electronic circuits, be as inherently reliable as those
circuits and be cheap and simple to manufacture.

Magnetically operated reed switches provide highly reliable, high speed, long life switch elements. In addition they can be operated, using a permanent magnet, without any physical contact between the switch and the operating mechanism.

If one or more permanent magnets are mounting on a rotating part of the vehicle steering column they can be used to trigger stationery reed switches around the periphery. By particular arrangements of the magnets and reeds, specific sequences of reed operation will be generated to determine the direction of rotation of the steering wheel. These specific sequences can then be processed by suitable electronics, e.g. in the form of integrated circuits, and used to cancel a previously selected direction indicator flash sequence at the appropriate time.

In accordance with the present invention, there is provided a cancellation device for a direction indication signal comprising a series of magnetic reed switches arranged in proximity to a steering column, means movable with the rotation of the steering column to cause the reed switches to operate in one order as the column is rotated in one direction and in the opposite order as the column is rotated in the other direction, and circuitry to detect the order in which the reed switches are operated and to cancel a turn signal as appropriate.

- 3 -

The reed switches may be operated by one or more permanent magnets mounted in a magnet carrier of non-magnetic material rotatable with the steering column.

Flux concentrators may be arranged between the reed switches to shield them from stray magnetic fields.

Alternatively, the reed switches may each be associated with a static permanent magnet and the steering column may carrying a shield to isolate or expose the reed switches from or to their associated magnets in a sequential manner.

The invention will be further described with reference to the accompanying diagrammatic drawings, in which :-

Figure 1 is a sectional view across the steering column showing one arrangement of reed switches to form a device in accordance with the invention;

Figure 2 is a similar view showing an alternative arrangement;

Figure 3 is a similar view showing a further alternative arrangement;

Figure 4 is a similar view showing yet a further alternative arrangement; and

Figure 5 is an elevation of the arrangement of figure 4.

Figure 1 shows permanent magnets 3, 4 and 5 mounted on and rotatable with a steering column 1 by means of a magnet carrier 2. As the steering column 1 rotates it passes the magnets 3, 4 and 5 over the reed switches 7, 8 and 9, which close in response to the magnetic field of the permanent magnets. The reed switches close sequentially. For example from the position shown in Figure 1, if the steering column rotates clockwise magnet 5 closes the reed switches in the order 9, 8 and 7. If the steering column rotates counter-clockwise magnet 4 closes the reed switches in the order 7, 8 and 9.

The reed switches are mounted on some fixed part (not shown in Figure 1) adjacent to the steering column, for example by the use of a printed circuit board 6. The magnet carrier would be manufactured from a non-magnetic material.

Under certain conditions the simple system of magnets and reed switches may not give the required switching. For example with the magnet between two reed switches they could both be closed. This may not be desirable for the operation of the electronics. For these circumstances, magnetic flux concentrators 10, 11, 12 and 13 are placed between the reed switches. These may be simple pieces of ferromagnetic wire or more complex sheets or laminates of ferromagnetic material . By concentrating the stray magnetic flux from the permanent magnets the angular movement of the steering column over which any particular reed is closed can be considerably

- 5 -

reduced. By this method a break before make action between
reed switches can be provided.

The field strengths of the magnets and the operating field
strength of the reed swithces are of course closely related.
The particular application will dictate the necessary values
for these parameters. Similarly the configuration, size
and material of the magnetic flux concentrators will be
dictated by the field strengths employed and the switching
action required. Specific values for any of these parameters
cannot be given.

Figure 1 shows one particular configuration for magnets
and reed with respect to the steering column. Many such
configurations are possible. Some alternative configurations
are shown in figures 2 to 5.

For instance figure 2 shows an arrangement in which four
reed switches 22 are mounted on a printed circuit board
25 mounted so as to surround the steering column 1. As
illustrated a pair of magnets 3 are mounted on the carrier
2 at spacings of 120° and 240° to give distinctive patterns
of operation depending on the direction of rotation.

In figures 1 and 2 the reed switches are in a plane generally
normal to the steering column axis.

Figure 3 shows an arrangement in which the reed switches
22 are arranged with their axes parallel with the steering

column axis.

The arrangements of figures 1, 2 and 3 rely on stationary reed switches and moving magnets.

In the arrangement of figures 4 and 5 each reed switch 22 is mounted on a printed circuit board 25 associated with a static permanent magnet 3. The steering column 1 carries a shield 26 to isolate the reed switches sequentially from the associated magnets to open the reed switches as the steering column rotates in one direction or the other. In an alternative arrangement the shield may extend substantially around the circumference of the steering column and have one (or more) windows to allow closure of the reed switches.

The use of magnetic reed switches circumvents the problems of making reliable contact to a rotating switch mechanism. Also the problems of mechanical wear are eliminated because there is no physical contact between moving and stationary parts of the system. The long life and inherent reliability of the sealed element magnet reed switch is maintained.

Various modifications may be made within the scope of the invention. For instance, in the figure 2 arrangement, there could be two magnets at 180° displacement and three reed switches, or three magnets spaced at 120° and four magnets spaced at 90°. The greater the number of magnets and reeds the greater the angular resolution but in all cases the numerical relationship between magnets and reeds must be
odd.

$

0105681

- 8 -

CLAIMS:

1.    A cancellation device for a direction indication
signal characterised by comprising a series of magnetic
reed switches (7, 8, 9, 22) arranged in proximity
to a steering column (1), means (2, 3, 4, 5, 26)
movable with the rotation of the steering column
to ause the reed switches (7, 8, 9, 22) to operate
in one order as the column (1) is rotated in one
direction and in the opposite order as the column
(2) is rotated in the other direction, and circuitry
to detect the order in which the reed switches (7,
8, 9, 22) are operated and to cancel a turn signal
as appropriate.

2.    A cancellation device according to claim 1,
characterised in that the reed switches (7, 8, 9,
22) lie in a plane generally normal to the steering
column (1).

3.    A cancellation device according to claim 2,
characterised in that the reed switches (7, 8, 9,
22) are mounted on a printed circuit board (6, 25).

4.    A cancellation device according to claim 1,
characterised in that the reed switches (22) are
arranged with their axes generally parallel with
the axis of the steering column (1).

5. A cancellation device according to any of claims 1 to 4, characterised in that the reed switches (7,8, 9, 22) are operated by one or more permanent magnets (3, 4, 5) mounted in a magnet carrier (2) of non-magnetic material rotatable with the steering column (1).

6. A cancellation system according to claim 5, characterised in that flux concentrators (10, 11, 12, 13) are arranged between the reed switches (7, 8, 9) to shield them from stray magnetic fields.

7. A cancellation system according to any of claims 1 to 4, characterised in that each reed switch (22) is associated with a static magnet (3) and in which the steering column (1) carries a shield (26) to isolate or expose the reed switches (22) from or to their associated magnets (3) in a sequential manner.

0105681

1/1

FIG.I.

FIG.2.

FIG.3.

FIG.4.

FIG.5.

0105681

European Patent Office

**EUROPEAN SEARCH REPORT**

Application number

EP 83 30 5683

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 393 700 (ROBERT BOSCH GmbH) * Figures 1-3 * | 1,4 | B 60 Q 1/40 |
| X | FR-A-2 342 869 (ROBERT BOSCH GmbH) * Figures 1-3 * | 1,4 | |
| X | US-A-3 914 737 (SATO) * Figures * | 1,2 | |
| X,P | US-A-4 365 121 (MORITA) * Figure 4; column 5, line 53 - column 6, line 8 * | 1,4,7 | |
| X | US-A-4 275 379 (NAKANO) * Figures 6A,6B * | 1,4 | TECHNICAL FIELDS SEARCHED (Int. Cl. ³) |
| X,P | FR-A-2 505 275 (FRANZ KIRSTEN ELEKTROTECHNISCHE SPEZIALFABRIK) * Figures 1,2 * | 1 | B 60 Q 1/40 H 01 H 36/00 |
| A | DE-A-2 001 188 (FLIGHT REFUELLING LTD.) * Figures 1,2 * | 3,5,6 | |
| A | US-A-3 735 298 (COLBY) * Figures 1,2 * | 1,2,5 | |

The present search report has been drawn up for all claims

| Place of search THE HAGUE | Date of completion of the search 03-01-1984 | Examiner ONILLON C.G.A. |
|---|---|---|